(19) Europäisches Patentamt / European Patent Office / Office européen des brevets

(11) **EP 3 127 247 B1**

(12) **FASCICULE DE BREVET EUROPEEN**

(45) Date de publication et mention de la délivrance du brevet:
**10.01.2018 Bulletin 2018/02**

(21) Numéro de dépôt: **15741907.8**

(22) Date de dépôt: **01.04.2015**

(51) Int Cl.:
*H04B 1/69* (2011.01)   *H04B 3/54* (2006.01)
*H04L 7/00* (2006.01)   *H04L 7/04* (2006.01)

(86) Numéro de dépôt international:
**PCT/EP2015/057253**

(87) Numéro de publication internationale:
**WO 2015/150488 (08.10.2015 Gazette 2015/40)**

(54) **PROCEDE DE COMMUNICATION RADIO DE DONNEES NUMERIQUES DANS UN ENVIRONNEMENT BRUITE**

DIGITALDATENRADIOKOMMUNIKATIONSVERFAHREN IN EINER VERRAUSCHTEN UMGEBUNG

DIGITAL DATA RADIO COMMUNICATION METHOD IN A NOISY ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2014 FR 1452870**

(43) Date de publication de la demande:
**08.02.2017 Bulletin 2017/06**

(73) Titulaire: **Université Grenoble Alpes**
**38400 Saint-Martin-d'Hères (FR)**

(72) Inventeur: **NOVAKOV, Emil**
**F-38240 Meylan (FR)**

(74) Mandataire: **Thibon, Laurent**
**Cabinet Beaumont**
**1, rue Champollion**
**38000 Grenoble (FR)**

(56) Documents cités:
**EP-A2- 2 509 248     US-A- 4 518 947**

**Description**

Domaine

La présente demande concerne un procédé de communication radio de données numériques dans un environnement bruité. La présente demande concerne plus particulièrement le cas où la quantité d'information à transmettre par l'émetteur est faible, par exemple un nombre à sept chiffres décimaux correspondant à un relevé de compteur.

Exposé de l'art antérieur

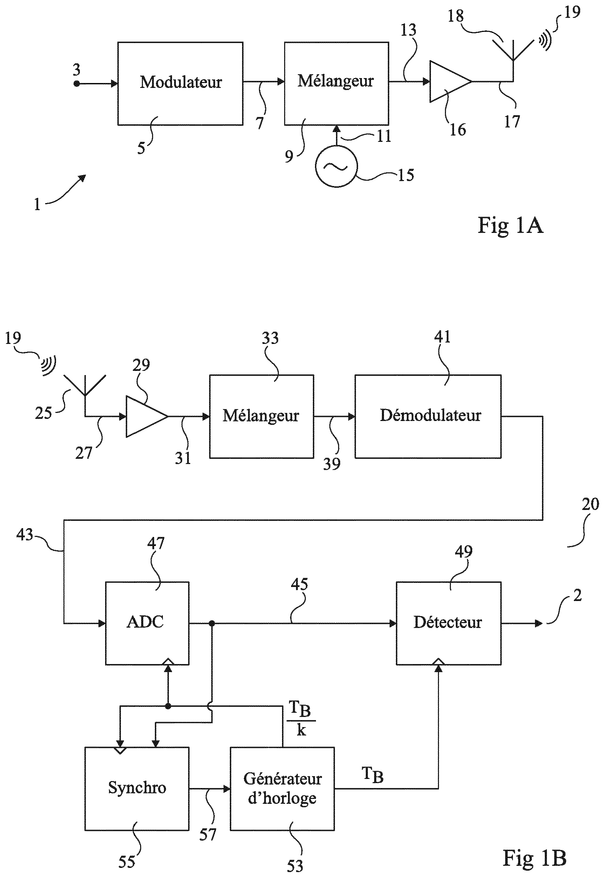

Un exemple d'un émetteur et d'un récepteur adaptés à une transmission radio de données numériques est illustré en figures 1A et 1B, sous forme de blocs fonctionnels.

La figure 1A représente un émetteur 1 qui reçoit des données numériques, échantillonnées à une période $T_A$, sur son entrée 3. Les données numériques sont transmises à un modulateur 5 qui les transforme en un signal de modulation 7. Plusieurs types de modulations sont possibles, par exemple une modulation d'amplitude, une modulation de phase, une modulation de fréquence ou une modulation d'amplitude en quadrature.

Le signal de modulation 7 est envoyé à un mélangeur 9 qui transpose le signal de modulation 7 autour d'une fréquence porteuse 11 pour fournir un signal modulé 13. La fréquence porteuse 11 est fournie par un oscillateur 15. Le signal 13 est amplifié par un amplificateur radiofréquence 16.

Le signal 17 est envoyé à une antenne 18 qui le transforme en une onde électromagnétique 19 pour transmettre le signal par voie hertzienne.

La figure 1B représente un récepteur 20 qui reçoit l'onde radio 19, émise par l'émetteur 1, sur une antenne 25 qui fournit un signal analogique 27. Le signal 27 correspond au signal 17 de la figure 1A, superposé à du bruit. Le signal 27 est amplifié par un amplificateur sélectif à faible bruit 29 pour fournir un signal modulé amplifié 31. Le signal 31 est transmis à un mélangeur 33 qui fournit un signal 39 qui correspond au signal de modulation transposé sur une porteuse de fréquence intermédiaire. Le signal 39 est envoyé à un démodulateur 41 qui le démodule pour en extraire un signal analogique 43. Le signal 43 est converti en un signal échantillonné 45 par un convertisseur analogique-numérique (ADC) 47. Le signal 45 est envoyé à un détecteur 49 qui restitue les données numériques 2. Un générateur d'horloge 53 génère un signal de période $T_B$ et un signal de période $T_B/k$ fixant la fréquence d'échantillonnage de l'ADC 47. Le signal $T_B$ est transmis au détecteur 49 tandis que le signal d'échantillonnage $T_B/k$ est transmis au convertisseur 47. La période $T_B$ doit être la plus proche possible de la période d'échantillonnage $T_A$ des données numériques transmises et synchronisée avec celle-ci. On prévoit couramment d'asservir le signal $T_B$ sur le signal reçu 43. On a représenté symboliquement une boucle d'asservissement comprenant un bloc de synchronisation 55 recevant le signal 45 de sortie de l'ADC 47 et envoyant un signal 57 au générateur d'horloge 53.

L'inconvénient d'un tel procédé est que, dans le cas où le signal 43 est bruité, le détecteur 49 commence à faire des erreurs et à ne plus détecter correctement le signal 45. De plus, il y a un risque de perte de synchronisation par le bloc 55, ce qui augmente encore les erreurs. Un moyen classique pour résoudre ce problème est d'utiliser un procédé d'étalement de spectre. Ce procédé permet, par une augmentation artificielle de la largeur du spectre du signal transmis, de réduire certaines perturbations qui se superposent au signal pendant la transmission radio. Ce procédé est coûteux et complexe à mettre en oeuvre. Il nécessite d'ajouter un système d'étalement de spectre et de codage du signal 7 au niveau de l'émetteur 1 et un système de traitement du signal complexe et sophistiqué au niveau du récepteur 20.

Les documents EP2509248 et US4518947 décrivent des dispositifs de codage et de décodage de données redondants.

Résumé

On s'intéresse ici à des applications telles que le relevé à distance de compteurs d'eau, de gaz, d'électricité ou tous types de systèmes qui transmettent ou reçoivent des informations espacées dans le temps et avec un faible débit. On souhaite que chaque compteur soit équipé d'un émetteur radio afin d'émettre des informations pour permettre un relevé à distance du contenu du compteur.

Ainsi, un mode de réalisation prévoit un procédé de transmission radio d'un mot de données entre un émetteur et un récepteur, comportant les étapes consistant à émettre au moins un bloc de données comprenant un mot de préambule connu du récepteur et mémorisé dans celui-ci, suivi d'un mot de données répété plusieurs fois ; détecter le mot de préambule ; synchroniser le récepteur sur l'émetteur ; effectuer un moyennage synchrone du mot de données répété ; et détecter les données transmises à partir du moyennage synchrone.

Selon un mode de réalisation, les mots de données transmis sont sur-échantillonnés par le récepteur.

Selon un mode de réalisation, les étapes de détection et de synchronisation comportent les étapes consistant à effectuer des corrélations entre le mot de préambule émis et des seconds mots de préambule correspondant au mot de préambule mémorisé cadencé à la période de l'horloge du récepteur plus ou moins un incrément différent d'un second mot de préambule à un autre ; et détecter la corrélation de taux le plus élevé et ajouter ou retirer l'incrément correspondant à l'horloge du récepteur.

Selon un mode de réalisation, l'étape de moyennage synchrone comporte les étapes consistant à réceptionner un mot de données répété plusieurs fois ;

stocker chacun des bits du premier mot de données reçu dans un registre de stockage ; additionner la valeur de chaque case du registre de stockage à chaque bit des mots de données suivants ; et diviser la valeur de chaque case du registre par le nombre de répétitions du mot de données.

Selon un mode de réalisation, le procédé comporte les étapes consistant à vérifier si les données détectées sont correctes ; et si non, recommencer l'émission avec une augmentation du nombre de répétitions du mot de données émis.

Selon un mode de réalisation, le procédé comporte les étapes consistant à prévoir plusieurs mots de préambule chacun étant associé à un nombre différent de répétitions du mot de données ; effectuer, pour chaque mot de préambule mémorisé, des corrélations entre le mot de préambule émis et des seconds mots de préambule correspondant au mot de préambule mémorisé cadencé à la période de l'horloge du récepteur plus ou moins un incrément différent d'un second mot de préambule à un autre ; effectuer le moyennage synchrone en fonction du nombre de répétitions du mot de données associé au mot de préambule détecté ; et si le mot de données associé au mot de préambule est détecté, envoyer une réponse à l'émetteur pour qu'il envoie des mots de données avec le même nombre de répétitions que le mot de données détecté ; si non, envoyer au récepteur un bloc de données avec un nombre de répétitions du mot de données supérieur au précédent.

Un autre mode de réalisation prévoit un dispositif de transmission radio d'un mot de données entre un émetteur et un récepteur, comprenant un émetteur capable d'émettre au moins un bloc de données comprenant un mot de préambule et un mot de données répété plusieurs fois ; un bloc de synchronisation élémentaire permettant de synchroniser le récepteur sur l'émetteur et de détecter le mot de préambule ; et un moyenneur synchrone effectuant la moyenne du mot de données répété.

Selon un mode de réalisation, le bloc de synchronisation élémentaire comprend une mémoire contenant un mot de préambule mémorisé ; plusieurs corrélateurs, chaque corrélateur ayant une première entrée recevant le mot de préambule émis, une deuxième entrée recevant le mot de préambule mémorisé cadencé à la période de l'horloge du récepteur plus ou moins un incrément différent pour chaque corrélateur, et une sortie fournissant le taux de corrélation entre les deux entrées ; et un contrôleur détectant le corrélateur fournissant le taux de corrélation le plus élevé.

Selon un mode de réalisation, le dispositif comprend plusieurs blocs de synchronisation élémentaires dont chacun est adapté à détecter un mot de préambule particulier.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

les figures 1A et 1B, décrites précédemment, illustrent, sous forme de blocs, un exemple d'un émetteur et d'un récepteur adaptés à la transmission radio de données numériques ;
la figure 2 illustre, sous forme de blocs, un format de données utilisé dans une transmission radio de données numériques selon un mode de réalisation de la présente invention ;
les figures 3A et 3B illustrent, sous forme de blocs, un émetteur et un récepteur adaptés à la transmission radio de données numériques selon un mode de réalisation de la présente invention ;
la figure 4 illustre, sous forme de blocs, un exemple de réalisation d'un bloc de synchronisation d'un récepteur tel que celui de la figure 3B ;
la figure 5 illustre un exemple de réalisation d'un corrélateur contenu dans le bloc de synchronisation d'un récepteur tel que celui de la figure 3B ;
les figures 6A et 6B illustrent deux exemples de réalisation d'un moyenneur synchrone tel que celui de la figure 3B ;
la figure 7 illustre un autre exemple de réalisation d'un bloc de synchronisation d'un récepteur tel que celui de la figure 3B ; et
La figure 8 représente un diagramme fonctionnel d'un récepteur tel que celui de la figure 3B utilisant un bloc de synchronisation du type illustré en figure 7.

Par souci de clarté, de mêmes éléments ont été désignés par de mêmes références aux différentes figures.

Description détaillée

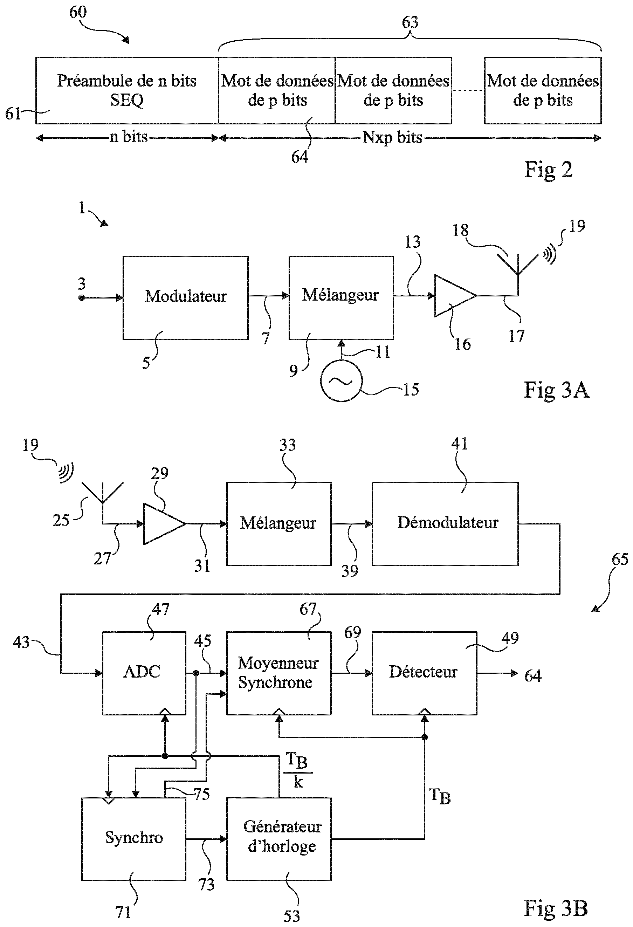

La figure 2 illustre un bloc de données 60 utilisé dans une transmission radio de données numériques selon un mode de réalisation de la présente invention. Le bloc de données 60 a un format spécifique et comporte deux types d'information, un mot de préambule 61 et une succession de mots de données binaires 63. Le mot de préambule 61 est une suite de n bits (n étant par exemple inférieur à 50 bits). Cette suite peut être pseudo-aléatoire (PN) et est choisie pour avoir de bonnes propriétés d'autocorrélation, par exemple une suite de Kasami ou de Gold. Le mot de préambule est connu du récepteur. La succession de mots de données 63 contient des mots de données identiques 64 de p bits répétés périodiquement N fois (N étant par exemple compris entre 2 et 50).

Les figures 3A et 3B illustrent, sous forme de blocs, un émetteur et un récepteur adaptés à la transmission radio de données numériques.

La figure 3A représente un émetteur 1 similaire à celui décrit en relation avec la figure 1A. L'émetteur 1 comprend un modulateur 5, un mélangeur 9, un oscillateur 15, un amplificateur 16 et une antenne 18. L'émetteur 1 reçoit sur son entrée 3 des données correspondant à une succession de blocs de données 60 tels qu'illustrée en figure 2 et envoie une onde électromagnétique 19.

La figure 3B représente un récepteur 65 comprenant une antenne 25, un amplificateur sélectif 29, un mélangeur 33, un démodulateur 41 et un convertisseur analogique-numérique (ADC) 47 tels que décrits en relation avec la figure 1B.

Le signal de sortie 45 du convertisseur 47 est dirigé vers un moyenneur synchrone 67, décrit par la suite, qui envoie un signal 69 à un détecteur 49. Le signal de sortie 45 est également dirigé vers un bloc de synchronisation spécifique 71, décrit par la suite, qui envoie un signal 73 au générateur d'horloge 53 et qui envoie un signal d'activation 75 au moyenneur synchrone 67. Le détecteur 49 transforme le signal 69 en le mot de données 64.

Le générateur d'horloge 53 fournit un signal de période $T_B$ transmis au détecteur 49 et un signal de sur-échantillonnage de période $T_B/k$ transmis au convertisseur (ADC) 47 et au moyenneur synchrone 67, k étant un entier supérieur à 2, par exemple compris entre 2 et 8. Le générateur d'horloge 53 et le détecteur 49 sont similaires à ceux décrits en relation avec la figure 1B.

Une succession de blocs de données 60, tel que celui illustré en figure 2, est appliquée sur l'entrée 3 de l'émetteur 1. On s'intéresse dans un premier temps au mot de préambule 61 et dans un second temps aux mots de données 63 d'un bloc de données 60.

Le convertisseur ADC a une résolution de r bits, r étant compris entre 4 et 16. A chaque période $T_B/k$, l'ADC fournit sur sa sortie 45 une donnée de r bits correspondant à une valeur du signal analogique 43. La donnée de r bits à la sortie 45 de l'ADC est envoyée vers le bloc de synchronisation 71. Le bloc de synchronisation 71 reconnaît le mot de préambule 61. Une fois le mot de préambule reconnu, le bloc 71 envoie un signal 73 au générateur d'horloge 53 afin de synchroniser cette horloge sur l'horloge de l'émetteur et envoie un signal d'activation 75 au moyenneur synchrone 67.

La donnée de r bits à la sortie 45 de l'ADC est également envoyée au moyenneur synchrone 67 qui est activé une fois que le mot de préambule 61 a été reconnu. Le moyenneur 67 connaît le nombre N de mots de données contenu dans la succession de mots de données identiques 63 suivant le mot de préambule 61. Le moyenneur effectue une moyenne des N mots de données 64 pour fournir un signal moyenné 69 échantillonné à $T_B$. Le signal 69 à la sortie du moyenneur 67 est envoyé au détecteur 49 pour qu'il le transforme en le mot de données binaires recherché 64.

Le moyennage synchrone réalisé par le moyenneur synchrone 67 permet d'améliorer le rapport de la puissance du signal sur la puissance du bruit d'un mot de données 64 transmis. Cette amélioration est d'un facteur de l'ordre de N dans le cas où le bruit superposé au mot de données 64 est un bruit blanc gaussien et où le mot de données 64 est répété N fois. Ceci permet d'augmenter la sensibilité effective du récepteur et la distance de transmission sans augmenter la puissance d'émission. A titre d'exemple, pour un signal analogique superposé à un bruit blanc gaussien pour lequel le rapport signal sur bruit est égal à 0,1 (soit -10 dB), si le signal est répété 50 fois, on obtient un rapport puissance du signal sur puissance du bruit amélioré 50 fois. Le rapport devient égal à 5 soit une amélioration de 17 dB.

Le système de réception fonctionne en deux étapes, à savoir une phase d'acquisition/synchronisation et une phase de moyennage. Dans la première phase, le bloc de synchronisation 71 détecte dans le signal reçu 43 la présence du mot de préambule 61 et ajuste en fréquence et en phase le signal d'horloge de période $T_B$. Pendant la deuxième phase, le moyenneur synchrone 67 effectue le moyennage des mots de données 64 et améliore le rapport puissance du signal sur puissance du bruit.

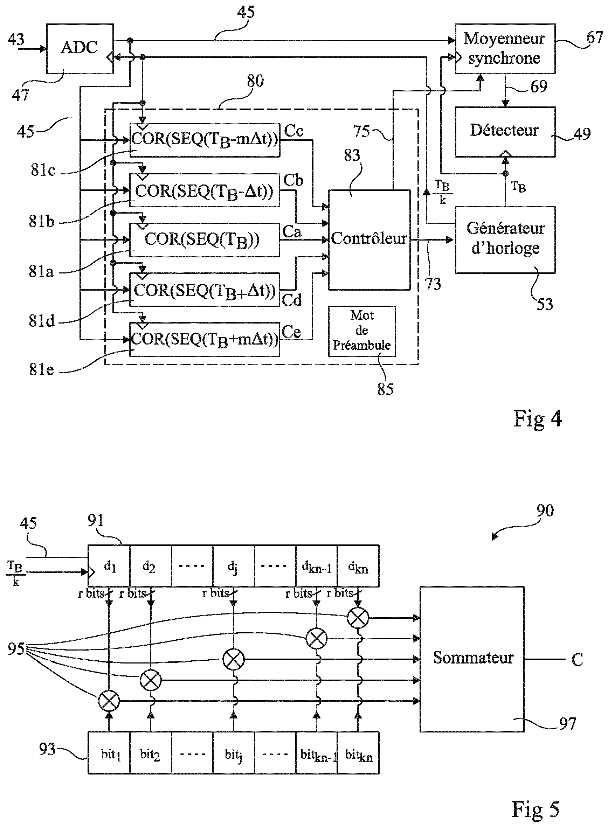

La figure 4 représente un exemple de réalisation d'un bloc de synchronisation 80 d'un récepteur tel que celui de la figure 3B. Le nombre total de corrélateurs est (1+2.m), m étant le nombre de périodes $\Delta T$ à ajouter et à retirer à la période du signal $T_B$. m est compris entre 1 et 4, par exemple 2 comme cela est illustré dans la figure 4.

Le bloc de synchronisation 80 comprend plusieurs corrélateurs en parallèle, cinq dans cet exemple (m = 2), 81a à 81e, et un contrôleur 83. Le signal 45, sur-échantillonné à la période $T_B/k$, de sortie de l'ADC 47 est transmis à chaque corrélateur. Les sorties $C_a$ à $C_e$ des corrélateurs 81a à 81e sont envoyées au contrôleur 83 dont une sortie 73 est envoyée au générateur d'horloge 53.

Un mot de préambule 85, comprenant une suite de bits identique à celle du mot de préambule 61 émis, est mémorisé dans le bloc de synchronisation 80. Les corrélateurs sont cadencés à la période $T_B/k$. Le corrélateur 81a $COR(SEQ(T_B))$ corrèle les données de r bits avec le mot de préambule 61 (SEQ) à la période $T_B$. Le corrélateur 81b $COR(SEQ(T_B-\Delta T))$ corrèle les données de r bits avec le mot de préambule 61 (SEQ) compressé dans le temps de $\Delta T$. Le corrélateur 81c $COR(SEQ(T_B-m\Delta T))$ corrèle les données de r bits avec le mot de préambule 61 (SEQ) compressé dans le temps de $m\Delta T$. Le corrélateur 81d $COR(SEQ(T_B+\Delta T))$ corrèle les données de r bits avec le mot de préambule 61 (SEQ) dilaté dans le temps de $\Delta T$. Le corrélateur 81e $COR(SEQ(T_B+m\Delta T))$ corrèle les données de r bits avec le mot de préambule 61 (SEQ) dilaté dans le temps de $m\Delta T$. Dans cet exemple, m = 2. $\Delta T$ est un temps, choisi au préalable de l'ordre de 0,5% à 1% de $T_B$.

Chaque corrélateur détermine un taux de corrélation, respectivement $C_a$ à $C_e$. Les taux de corrélation $C_a$ à $C_e$ sont envoyés au contrôleur 83. Le contrôleur 83 détecte le taux de corrélation le plus élevé ainsi que le moment où ce taux apparait.

Si l'émetteur et le récepteur ont exactement la même période d'échantillonnage ($T_A = T_B$) au moment où les données de r bits correspondent au mot de préambule 61 mémorisé dans le bloc de synchronisation 71, le signal Ca est maximal. En général, la période d'échantillonnage $T_A$ est différente de la période d'échantillonnage $T_B$, le taux de corrélation maximum apparaîtra donc à la sortie d'un des corrélateurs j pour lequel $T_B = T_A + j\Delta T$, j étant un nombre entier compris entre -m et m.

Ainsi le bloc de synchronisation 80 permet d'estimer le décalage de temps $j\Delta T$ entre $T_A$ et $T_B$, de détecter le mot de préambule 61 contenu dans le signal reçu, et d'évaluer la différence de temps $j\Delta T$ entre les horloges. C'est la synchronisation en fréquence. Le moment où le taux de corrélation le plus élevé apparaît correspond à la synchronisation en temps (synchronisation en phase).

Le signal de sortie 73 du contrôleur 83 est envoyé au générateur d'horloge 53. Le signal 73 contient une donnée correspondant à l'incrément $j\Delta T$ à ajouter ou à retirer à la période du signal $T_B$ pour que la période de l'horloge du récepteur se rapproche autant que possible de celle de l'horloge de l'émetteur. L'incrément (positif ou négatif) contenu dans le signal 73 ($+2\Delta T$, $+\Delta T$, 0, $-\Delta T$, $-2\Delta T$) est ajouté à la période $T_B$. Le signal 73 contient aussi une donnée correspondant au moment où un taux de corrélation élevé est détecté. En fonction de cette donnée, la période $T_B$ est décalée dans le temps pour être en phase avec la période $T_A$. L'horloge du récepteur 53 est ainsi ajustée en fréquence et en phase sur l'horloge de l'émetteur $T_A$. A la fin de la détection du mot de préambule, on a $T_B = T_A$.

La figure 5 illustre un exemple de réalisation d'un des corrélateurs de la figure 4. La figure 5 représente un exemple de corrélateur 90. Ce corrélateur comprend un registre à décalage 91, un registre de stockage 93, des multiplieurs 95 et un sommateur 97. Le registre 91 comprend $d_j$ données de r bits, j allant de 1 à kn. A chaque période $T_B/k$, les données $d_j$ sont décalées d'une position à droite. Le registre 93 comprend k fois n bits. Les multiplieurs 95 sont au nombre de kn, k étant le nombre d'échantillons par bit des mots de données 64, compris entre 2 et 8, et n le nombre de bits dans le mot de préambule 61. Le registre 91 est cadencé à la période d'échantillonnage $T_B/k$. Le mot de préambule mémorisé 85, affecté d'une dilatation ou d'une compression ($\pm m\Delta T$) différente pour chaque corrélateur, est stocké dans le registre 93. Les kn multiplieurs 95 multiplient chaque bit de la donnée $d_j$ par le bit j du mot de préambule mémorisé dans le corrélateur 90, j allant de 1 à kn. Le sommateur 97 reçoit les résultats des kn multiplieurs 95 et détermine le taux de corrélation C. Comme, ici, le mot de préambule 61 est un mot binaire de valeur +1 ou -1, la multiplication peut être réalisée par la fonction OU EXCLUSIF.

Après la phase d'acquisition/synchronisation, la phase de moyennage, cadencée à la période $T_B$, commence.

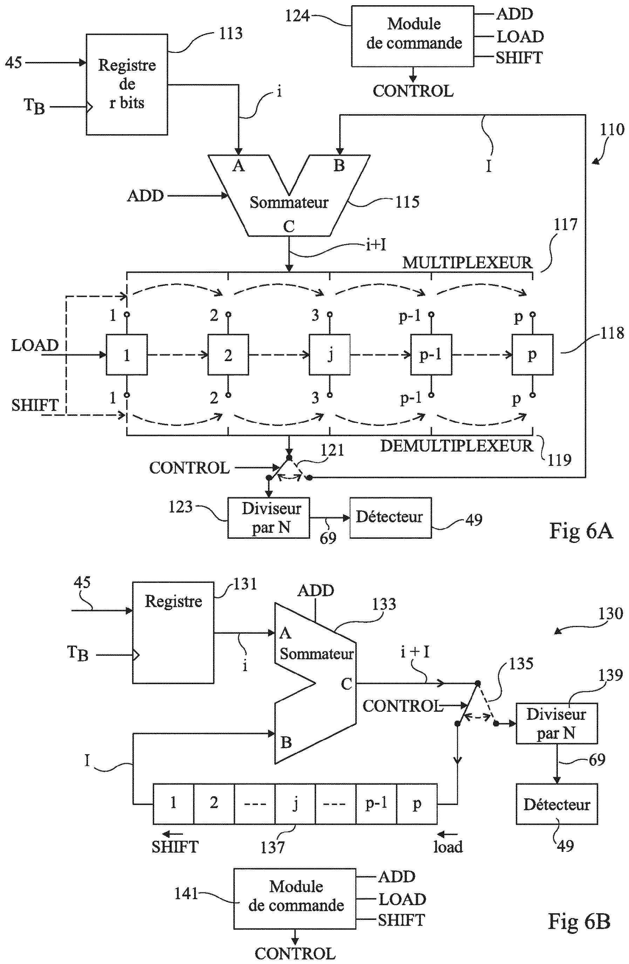

Les figures 6A et 6B illustrent deux exemples de réalisation d'un moyenneur synchrone tel que celui de la figure 3B. L'exemple de réalisation de la figure 6A représente un moyenneur synchrone réalisable de manière matérielle. L'exemple de réalisation de la figure 6B représente un moyenneur synchrone réalisable de préférence de manière logicielle.

La figure 6A représente un moyenneur synchrone 110 comprenant un registre 113 qui reçoit la donnée de r bits de la sortie 45 de l'ADC 47. Le registre 113 envoie la donnée i de r bits à une première entrée d'addition A d'un sommateur 115, à la cadence du signal $T_B$, i allant de 1 à p, p étant le nombre de bits dans le mot de données 64. $T_B$ est l'horloge obtenue après la synchronisation de l'horloge du récepteur avec celle de l'émetteur ($T_A$) en fréquence et en phase. Le fait d'enregistrer les données à la sortie 45 de l'ADC dans le registre 113 à la cadence $T_B$ est équivalent à la division par k du nombre de données à la sortie de l'ADC.

Le sommateur 115 reçoit sur une deuxième entrée d'addition B un mot I. Le sommateur 115 est commandé par un signal ADD. La sortie C du sommateur, correspondant à un mot i+I, est envoyée à un multiplexeur 117. La donnée i à l'entrée A comprend r bits. Comme la somme A + B est effectuée N fois, la donnée de sortie C peut comprendre jusqu'à R bits, R = r + L bits, L étant le plus grand entier proche de log2(N). Par exemple, si r = 8 et N = 50, on a L = 6, donc le mot i+I de la sortie C comprend 14 bits.

Le multiplexeur 117 dirige la sortie C du sommateur 115 vers une des mémoires j de R bits du registre 118, j allant de 1 à p. Le multiplexeur 117 est commandé par un signal SHIFT. Le signal SHIFT permet de choisir la mémoire j à connecter à la sortie C du sommateur.

Le bloc de registres 118 comporte p entrées et p sorties correspondant aux p mémoires du bloc de registre 118. Le bloc 118 reçoit la sortie C du sommateur 115, dirigé par le multiplexeur 117, sur l'une des p entrées du bloc 118. Un signal de commande LOAD permet de fournir en sortie d'une mémoire j le mot I stocké dans cette mémoire.

Un démultiplexeur 119 dirige la sortie d'une des p mémoires vers l'entrée d'un commutateur 121. Le démultiplexeur 119 est commandé par le signal SHIFT. Le multiplexeur 117 et le démultiplexeur 119 sont synchronisés, c'est-à-dire que si le multiplexeur 117 dirige la sortie C du sommateur 113 sur l'entrée d'une mémoire j, le démultiplexeur 119 dirige l'entrée du commutateur 121 sur la sortie de la même mémoire.

Le commutateur 121 reçoit un mot I, contenu dans la mémoire j du bloc 118. Le commutateur 121 est commandé par un signal CONTROL. Le commutateur dirige le mot I vers l'entrée B du sommateur 115 lorsque le signal CONTROL est à l'état bas. Sinon le mot I est dirigé vers un diviseur par N 123.

Le diviseur 123 reçoit un mot I, contenu dans une des mémoires j, et le divise par N. Le diviseur 123 fournit au détecteur 49 la moyenne 69 des données i des N mots de données transmis, i allant de 1 à p.

Le système de la figure 6A effectue le calcul suivant :

$$R_j = \frac{1}{N} \sum S_{jl}$$

où $R_j$ est la moyenne des données $d_j$ de N mots de données 64 transmis, j allant de 1 à p, $S_{jl}$ étant une donnée de R bits, et N étant le nombre de mots de données transmis.

Un module de commande 124 fournit les signaux de commandes ADD, SHIFT, LOAD et CONTROL.

Le fonctionnement du moyenneur synchrone de la figure 6A est le suivant.

A l'activation du moyenneur synchrone 110 par le bloc de synchronisation 71 (voir figure 3B), le moyenneur est initialisé. Les mémoires du bloc 118 sont mises à zéro, les signaux ADD, SHIFT, LOAD et CONTROL sont à l'état bas. Le multiplexeur 117 dirige la sortie C du sommateur 115 sur la mémoire 1. Le démultiplexeur 119 dirige l'entrée du commutateur 121 sur la sortie de la mémoire 1.

A chaque front montant du signal $T_B$, le registre 113 envoie une donnée i de la sortie 45 de l'ADC à l'entrée A du sommateur 115. Le module de commande 124 envoie une impulsion ADD au sommateur 115. Le front montant de l'impulsion ADD active le sommateur 115 qui effectue l'addition entre la donnée i reçue à son entrée A et le mot I de son entrée B puis envoie le mot i+I qui en résulte à l'entrée de la mémoire j, connectée par le multiplexeur 117. Lors du front descendant de l'impulsion ADD, le module de commande 124 envoie une impulsion SHIFT au multiplexeur 117 et au démultiplexeur 119. Le front montant de l'impulsion SHIFT permet de diriger la sortie C du sommateur 115 de l'entrée de la mémoire j à l'entrée de la mémoire j+1 et permet de diriger l'entrée du commutateur 121 de la sortie de la mémoire j à la sortie de la mémoire j+1. Lors du front descendant de l'impulsion SHIFT, le module de commande 124 envoie une impulsion LOAD au bloc de registres 118. Le mot I contenu dans la mémoire j+1 est fourni à la sortie de la mémoire et envoyé vers l'entrée B du sommateur 115. Lors du front descendant de l'impulsion LOAD, le traitement de la donnée i est terminé et le moyenneur synchrone est prêt à traiter la donnée i+1 lors de la période $T_B$ suivante. Les p données de r bits sont reçues N fois. Chaque mémoire j du bloc de registre 118 contient la somme des données i des N mots de données 64 transmis.

Les impulsions ADD, SHIFT et LOAD, ont une durée inférieure à la période $T_B$ divisée par 3. Lorsque le multiplexeur 117 et le démultiplexeur 119 sont connectés à la mémoire p et qu'un nouveau décalage d'une mémoire est demandé, le multiplexeur 117 et le démultiplexeur 119 se connectent à la mémoire 1 du registre 118.

Lorsque le module de commande détecte que les p données de r bits ont été reçues N fois et traitées, le signal CONTROL est mis à l'état haut et l'entrée du commutateur 121 est dirigée vers le diviseur 123. Une impulsion LOAD commande que le mot I contenu dans la mémoire j est fourni en sortie. Ce mot I est envoyé au diviseur 123 et est divisé par N. Le diviseur 123 fournit la moyenne de la première donnée du bloc de p bits 64 transmis N fois au détecteur 49. Lors du front descendant de l'impulsion LOAD, une impulsion SHIFT connecte la mémoire j+1 du bloc de registre 118. Les deux étapes effectuées après la mise à l'état haut du signal CONTROL sont effectuées p fois. Le moyenneur synchrone fournit ainsi la moyenne des données i de r bits des N mots de données transmis au détecteur 49, ce qui correspond à la moyenne du signal de p bits transmis.

La figure 6B représente un moyenneur synchrone 130 comprenant un registre 131 qui reçoit la donnée de r bits à la sortie 45 de l'ADC 47. Le registre 131 envoie les données i de r bits à une première entrée d'addition A d'un sommateur 133, à la cadence du signal $T_B$.

Le sommateur 133 reçoit sur une deuxième entrée d'addition B un mot I provenant d'un registre de p mots de R bits 137. Le sommateur 133 est commandé par un signal ADD. La sortie C du sommateur, correspondant à un mot i+I, est envoyée vers un commutateur 135. Le commutateur est commandé par un signal CONTROL. Le commutateur 135 dirige le mot i+I vers le registre 137 lorsque le signal CONTROL est à l'état bas sinon le mot i+I est dirigé vers un diviseur par N 139. Le registre 137 est commandé par les signaux SHIFT et LOAD.

Le registre 137 reçoit la sortie C du sommateur 133 lorsque le signal CONTROL est à l'état haut. Le diviseur divise par N le mot i+I qui correspond à la somme des données i des N mots de données transmis. Le diviseur envoie la moyenne des données i de r bits des N mots transmis au détecteur 49.

Le fonctionnement du moyenneur synchrone de la figure 6B est le suivant.

A l'activation du moyenneur synchrone 130 par le bloc de synchronisation 67, le moyenneur est initialisé. Le registre à décalage 137 est mis à zéro, les signaux ADD, SHIFT, LOAD et CONTROL sont à l'état bas.

Le registre 131 envoie une donnée i à l'entrée A du sommateur 133 à la cadence de la période $T_B$. Une impulsion ADD est envoyée au sommateur 133. Le front montant de l'impulsion ADD active le sommateur 133 qui effectue l'addition entre la donnée i reçue à son entrée A et le mot I de son entrée B puis envoie le mot i+I qui en résulte à l'entrée du commutateur 135. Le commutateur 135 dirige son entrée vers l'entrée du registre 137. Lors du front descendant de l'impulsion ADD, une impulsion SHIFT est envoyée au registre 137. Le front montant de l'impulsion SHIFT permet au registre 137 de fournir un mot I à l'entrée B du sommateur 133. Lors du front descendant de l'impulsion SHIFT, une impulsion LOAD est envoyée au registre 137, le front montant de l'impulsion LOAD permet de charger le mot i+l en sortie du commutateur 135. Lors du front descendant de l'impulsion LOAD, le traitement de la donnée i est terminé et le moyenneur synchrone est prêt à traiter la donnée i+1 lors de la période $T_B$ suivante.

Une fois que les p données attendues sont reçues N-1 fois, le module de commande 141 met à l'état haut le signal CONTROL et l'entrée du commutateur 135 est dirigée vers le diviseur par N 139. Les p mots contenus dans le registre 137 sont additionnés aux p données du dernier mot de données transmis. Le sommateur 133 envoie au diviseur 139 la somme des données i des N mots transmis. Le diviseur 139 fournit la moyenne 69 des données i des N mots de données transmis au détecteur 49, ce qui correspond à la moyenne 69 du signal de p bits transmis.

Selon un aspect de la présente invention, on souhaite réduire la quantité de données à transmettre en effectuant le moyennage synchrone avec le moins de répétitions de mot de données possible. On commence par envoyer un mot de données répété un faible nombre de fois, par exemple N = 10 fois. Si le mot de données est reçu correctement par le récepteur à moyennage synchrone, le récepteur envoie une confirmation vers l'émetteur. La confirmation consiste à renvoyer le mot de données reçu en le répétant également N = 10 fois. La communication est établie et le système fonctionne en répétant les données N = 10 fois. Si le mot n'est pas reçu correctement et si l'attente de la confirmation du récepteur à l'émetteur est supérieure à une durée $T_{CONF}$, l'émetteur envoie de nouveau le mot de données répété plus de fois que la fois précédente, dans cet exemple N = 20 fois. Cette procédure est répétée autant de fois que nécessaire. Si après un certain nombre de répétitions maximal $Q_{MAX}$, la communication n'est pas établie, on suppose que la liaison est impossible. Afin d'indiquer au moyenneur synchrone le nombre de mots de données transmis, un mot de préambule particulier caractérisant le nombre de répétitions du mot de données est envoyé en amont du mot de données répété périodiquement.

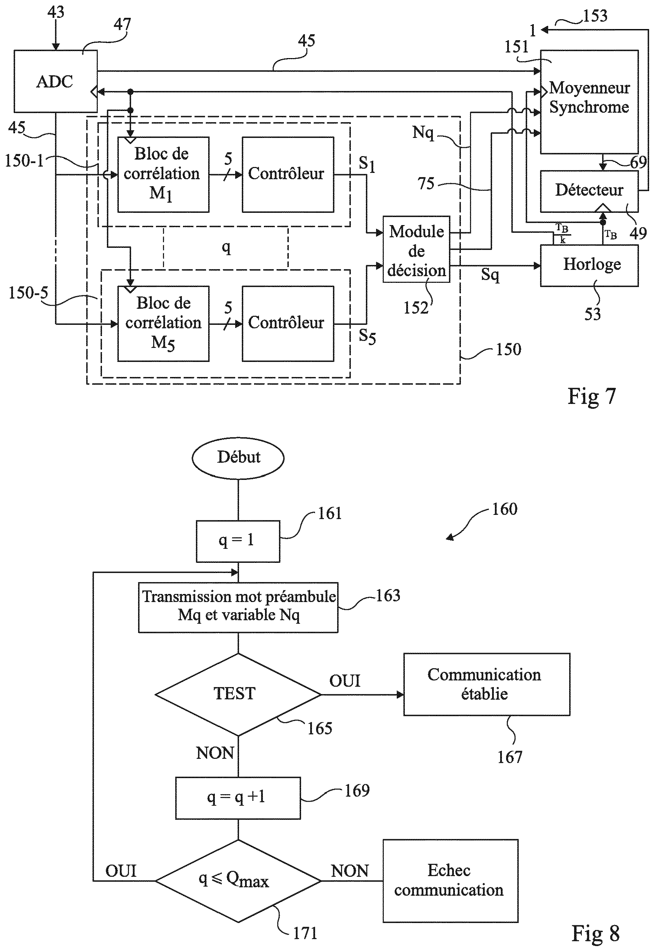

La figure 7 représente un exemple de réalisation d'un bloc de synchronisation 150 et d'un moyenneur synchrone 151 contenus dans un récepteur, tel que celui décrit en relation avec la figure 3B, permettant d'optimiser le nombre de répétitions du mot de données à transmettre.

Le bloc de synchronisation 150 comprend plusieurs blocs de synchronisation élémentaires, par exemple cinq, 150-1 à 150-5. Chacun des blocs élémentaires est, par exemple, identique au bloc 80, décrit en relation avec la figure 4. Les blocs 150-1 à 150-5 sont connectés en parallèle. Chaque bloc de synchronisation élémentaire 150-q (q allant de 1 à 5 dans cet exemple) reçoit le signal 45 de la sortie de l'ADC 47 puis envoie un signal $S_q$ à un module de décision 152. Le module de décision 152 reçoit les signaux $S_q$ des blocs élémentaires 150-q puis envoie le signal $S_q$ à l'horloge 53 ainsi qu'une donnée $N_q$ et un signal d'activation 75 au moyenneur synchrone 67. Chaque bloc de synchronisation élémentaire 150-q contient en mémoire un mot de préambule $M_q$ particulier, tel que le mot de préambule 61 décrit en relation avec la figure 2. Le moyenneur synchrone 151 reçoit la donnée $N_q$ ainsi que le signal 45 de la sortie de l'ADC 47 et envoie un signal moyenné 69 au détecteur. Le détecteur envoie un signal sur une sortie 153 à l'émetteur 1.

Le fonctionnement du bloc de synchronisation 150 et du moyenneur 151 est le suivant.

Les blocs de synchronisation élémentaires 150-1 à 150-5 reçoivent le signal 45 de sortie de l'ADC. Chaque bloc 150-q compare le signal 45 au mot de préambule $M_q$ qu'il contient. Le bloc 150-q qui détecte le mot de préambule $M_q$ émis envoie un signal $S_q$ au module de décision 152, $S_q$ correspondant au signal 73 décrit en relation avec la figure 4. Le module de décision 152 envoie au moyenneur synchrone un nombre $N_q$ en fonction du mot de préambule $M_q$ détecté. Le nombre $N_q$ est le nombre de répétitions du mot de données émis et est par exemple compris entre 10 et 50. Le moyenneur synchrone 151 effectue la moyenne du mot de données répété $N_q$ fois et envoie les données 69 au détecteur 49. Si les données sont correctement détectées, le détecteur 49 envoie sur la sortie 153 une réponse à l'émetteur 1. La réponse correspond à la confirmation du récepteur à l'émetteur qui consiste à renvoyer le mot de données reçu en le répétant le même nombre de fois qu'à l'émission.

La figure 8 représente un diagramme fonctionnel 160 d'un système de communication basé sur le récepteur de la figure 3B, utilisant un synchronisateur 150 et un moyenneur synchrone 151 du type illustré en figure 7 adapté à optimiser le nombre de répétitions d'un mot de données. Un bloc 161 est initialisé à q égal 1. Au début d'une communication, un premier bloc de données 60, tel que décrit en relation avec la figure 2, contenant un mot de préambule $M_1$ et un mot de données répété $N_1$ fois est émis.

A une première étape, bloc 163, le mot de préambule $M_q$ est transmis et le nombre $N_q$ caractérisant le nombre de répétitions du mot de données est envoyé au moyenneur synchrone 151.

A l'étape suivante, bloc TEST 165, l'émetteur attend, pendant un temps $T_{CONF}$, la réponse du récepteur indiquant que le signal émis 43 a été reçu correctement. Si la réponse à la condition du bloc TEST 165 est OUI, la communication est établie, bloc 167. Si la réponse à la condition du bloc TEST 165 est NON, la variable q est incrémentée de 1 (bloc 169) et envoyée au bloc de condition 171.

A l'étape suivante, bloc de condition 171, on vérifie que le nombre $Q_{max}$ de mots de préambule disponibles pour établir une communication n'est pas atteint. Si $Q_{max}$ est atteint la réponse à la condition du bloc 171 est NON. Le système s'arrête et la communication n'est pas établie (Echec communication). Si $Q_{max}$ n'est pas atteint la réponse à la condition du bloc 171 est OUI, on envoie un nouveau bloc de données 60 contenant un nouveau mot de préambule $M_{q+1}$ et un mot de données répété $N_{q+1}$ fois. Le système retourne à l'étape du bloc 163.

A titre d'exemple de valeurs numériques :

- la taille du mot de préambule est comprise entre 16 et 128 bits par exemple 32 bits ;
- la taille d'un mot de données est comprise entre 16 et 256 bits par exemple 32 bits ;
- le nombre de répétitions N est compris entre 4 et 50 par exemple 10.
- le nombre de blocs de synchronisation 80 contenu dans le synchronisateur 150, défini par q est compris entre 3 et 7 par exemple 5.

Bien que le bloc de synchronisation 80 contienne cinq corrélateurs dans l'exemple décrit en relation avec la figure 4, le bloc de synchronisation 80 peut contenir un nombre différent de corrélateurs, par exemple sept.

## Revendications

**1.** Procédé de transmission radio d'un mot de données entre un émetteur (1) et un récepteur (65), comportant les étapes suivantes :

émettre au moins un bloc de données comprenant un mot de préambule (61) connu du récepteur (65) et mémorisé dans celui-ci, suivi d'un mot de données (64) répété à l'identique plusieurs fois, les mots identiques étant transmis directement l'un derrière l'autre sans qu'aucun autre mot de données ne soit transmis entre temps ;
détecter le mot de préambule (61) ;
synchroniser le récepteur sur l'émetteur en fréquence et en phase pendant la réception du mot de préambule ;
effectuer un moyennage synchrone du mot de données répété ; et
détecter les données transmises à partir du moyennage synchrone ;
dans lequel l'étape de moyennage synchrone comporte les étapes suivantes :

réceptionner un mot de données répété plusieurs fois ;
stocker chacun des bits du premier mot de données reçu dans un registre de stockage ;
additionner la valeur de chaque case du registre de stockage à chaque bit des mots de données suivants ; et
diviser la valeur de chaque case du registre par le nombre de répétitions du mot de données.

**2.** Procédé selon la revendication 1, dans lequel les mots de données transmis sont sur-échantillonnés par le récepteur (53).

**3.** Procédé selon la revendication 1 ou 2, dans lequel les étapes de détection et de synchronisation comportent les étapes suivantes :

effectuer des corrélations entre le mot de préambule émis (61) et des seconds mots de préambule correspondant au mot de préambule mémorisé cadencé à la période de l'horloge (53) du récepteur plus ou moins un incrément ($\Delta T$) différent d'un second mot de préambule à un autre ; et
détecter la corrélation de taux le plus élevé et ajouter ou retirer l'incrément correspondant à l'horloge (53) du récepteur.

**4.** Procédé selon l'une quelconque des revendications 1 à 3, comportant les étapes suivantes :

vérifier si les données détectées sont correctes ; et
si non, recommencer l'émission avec une augmentation du nombre de répétitions du mot de données émis.

**5.** Procédé selon les revendications 3 et 4, comportant les étapes suivantes :

prévoir plusieurs mots de préambule, chacun étant associé à un nombre différent de répétitions du mot de données ;
effectuer, pour chaque mot de préambule mémorisé, des corrélations entre le mot de préambule émis (61) et des seconds mots de préambule correspondant au mot de préambule mémorisé cadencé à la période de l'horloge (53) du récepteur plus ou moins un incrément différent d'un second mot de préambule à un autre ;
effectuer le moyennage synchrone en fonction du nombre de répétitions du mot de données associé au mot de préambule détecté ;
si le mot de données associé au mot de préambule est détecté, envoyer une réponse (153) à l'émetteur pour qu'il envoie des mots de données avec le même nombre de répétitions que le mot de données détecté ; et
si non, envoyer au récepteur un bloc de données (60) avec un nombre de répétitions du mot de données supérieur au précédent.

**6.** Dispositif de transmission radio d'un mot de données entre un émetteur (1) et un récepteur (65), comprenant :

un émetteur (1) capable d'émettre au moins un bloc de données (60) comprenant un mot de préambule (61) et un mot de données (64) répété à l'identique plusieurs fois, les mots identiques étant transmis directement l'un derrière l'autre sans qu'aucun autre mot de données ne soit transmis entre temps ;

un bloc de synchronisation élémentaire (80) permettant de synchroniser le récepteur (65) sur l'émetteur (1) en fréquence et en phase pendant la réception du mot de préambule et de détecter le mot de préambule (61) ;

un moyenneur synchrone (67) effectuant la moyenne du mot de données (64) répété et comportant:

- des moyens adaptés pour réceptionner un mot de données répété plusieurs fois ;
- un registre adapté pour stocker chacun des bits du premier mot de données reçu dans un registre de stockage ;
- un sommateur adapté pour additionner la valeur de chaque case du registre de stockage à chaque bit des mots de données suivants ; et
- un diviseur adapté pour diviser la valeur de chaque case du registre par le nombre de répétition du mot de données; et

un détecteur pour détecter les données résultant du moyennage synchrone.

**7.** Dispositif selon la revendication 6, dans lequel le bloc de synchronisation élémentaire (80) comprend :

une mémoire contenant un mot de préambule mémorisé (85) ;

plusieurs corrélateurs (81), chaque corrélateur ayant une première entrée recevant le mot de préambule émis, une deuxième entrée recevant le mot de préambule mémorisé cadencé à la période de l'horloge du récepteur plus ou moins un incrément (ΔT) différent pour chaque corrélateur, et une sortie fournissant le taux de corrélation entre les deux entrées ; et

un contrôleur (83) détectant le corrélateur fournissant le taux de corrélation le plus élevé.

**8.** Dispositif selon la revendication 6 ou 7, comprenant plusieurs blocs de synchronisation élémentaires (80) dont chacun est adapté à détecter un mot de préambule particulier.

**Patentansprüche**

**1.** Ein Verfahren der Funkübertragung eines Datenwortes zwischen einem Transmitter (1) und einem Empfänger (65), das folgende Schritte aufweist:

Übertragen wenigstens eines Datenblocks, der ein Präambel-Wort (61) aufweist, das dem Empfänger (65) bekannt und darin gespeichert ist, gefolgt von einem Datenwort (64), das mehrere Male identisch wiederholt wird, wobei die identischen Wörter eines nach dem anderen direkt nacheinander übertragen werden ohne eingefügte Übertragung anderer Datenwörter;

Detektieren des Präambel-Wortes (61);

Synchronisieren der Frequenz und der Phase des Empfängers mit dem Transmitter während des Empfangens des Präambel-Wortes;

Synchrone Mittelung des wiederholten Datenwortes; und

Detektieren der übertragenen Daten basierend auf der synchronen Mittelung;

wobei der synchrone Mittelungsschritt folgende Schritte aufweist:

Empfangen eines Datenwortes, das mehrere Male wiederholt wird;

Speichern jedes Bits des zuerst empfangenen Datenwortes in einem Speicherregister;

Addieren des Wertes jeder Zelle des Registers mit jedem Bit der nächsten Datenwörter; und

Dividieren des Wertes jeder Zelle des Speicherregisters durch die Anzahl der Wiederholungen des Datenwortes.

**2.** Verfahren nach Anspruch 1, wobei die übertragenen Datenwörter von dem Empfänger (53) überabgetastet sind.

**3.** Verfahren nach Anspruch 1 oder 2, wobei die Detektions- und Synchronisationsschritte folgende Schritte aufweisen:

Durchführen von Korrelationen zwischen dem übertragenen Präambel-Wort (61) und den zweiten Präambel-Wörtern entsprechend dem gespeicherten Präambel-Wort mit dem Takt der Periode der Empfängeruhr (53) plus oder minus einem Inkrement (ΔT), das von einem zweiten Präambel-Wort zum anderen unterschiedlich ist; und

Detektieren der Korrelation mit der höchsten Rate und Addieren oder Entfernen des Inkrements entsprechend der Empfängeruhr (53).

**4.** Verfahren nach einem der Ansprüche 1 bis 3, das die folgenden Schritte aufweist:

Verifizieren, ob die detektierten Daten korrekt sind; und

wenn nicht, erneutes Starten der Emission mit einer Erhöhung der Anzahl von Wiederholungen des übertragenen Datenwortes.

5. Verfahren nach Anspruch 3 und 4, das die folgenden Schritte aufweist:

Vorsehen einer Vielzahl von Präambel-Wörtern, wobei jedes mit einer anderen Anzahl von Wiederholungen des Datenwortes assoziiert ist; für jedes gespeicherte Präambel-Wort Durchführen von Korrelationen zwischen dem übertragenen Präambel-Wort (61) und den zweiten Präambel-Wörtern entsprechend dem gespeicherten Präambel-Wort mit dem Takt der Periode der Empfängeruhr (53) plus oder minus einem Inkrement, das von einem zweiten Präambel-Wort zum anderen unterschiedlich ist; Durchführen der synchronen Mittelung gemäß der Anzahl der Wiederholungen des Datenwortes, das mit dem detektierten Präambel-Wort assoziiert ist; wenn das Datenwort, das mit dem Präambel-Wort assoziiert ist, detektiert ist, Senden einer Antwort (153) zu dem Sender, so dass er die Datenwörter mit derselben Anzahl von Wiederholungen wie das detektierte Datenwort sendet; und wenn nicht, Senden eines Datenblocks (60) zu dem Empfänger mit einer Anzahl von Wiederholungen des Datenwortes, die größer ist als die vorhergehende.

6. Eine Vorrichtung der Funkübertragung eines Datenwortes zwischen einem Transmitter (1) und einem Empfänger (65), die Folgendes aufweist:

einen Transmitter (1), der geeignet ist zum Übertragen wenigstens eines Datenblocks (60), der ein Präambel-Wort (61) und ein mehrere Male identisch wiederholtes Datenwort (64) aufweist, wobei die identischen Wörter eines nach dem anderen direkt nacheinander übertragen werden ohne eingefügte Übertragung anderer Datenwörter; einen elementaren Synchronisationsblock (80), der in der Lage ist, den Empfänger (65) mit dem Transmitter (1) in Frequenz und in Phase während der Wiederholung des Präambel-Wortes zu synchronisieren und das Präambel Wort (61) zu detektieren; einen synchronen Mittler (67), der das wiederholte Datenwort (64) mittelt und Folgendes aufweist:

Mittel zum Empfangen eines mehrere Male wiederholten Datenwortes; ein Register zum Speichern von allen Bits des ersten empfangenen Datenwortes in einem Speicherregister; einen Addierer zum Addieren des Wertes jeder Zelle des Speicherregisters mit jedem Bit der nächsten Datenwörter; und einen Dividierer zum Dividieren des Wertes jeder Zelle des Registers durch die Anzahl der Wiederholungen des Datenwortes; und einen Detektor zum Detektieren der Daten, die sich aus der synchronen Mittelung ergeben.

7. Vorrichtung nach Anspruch 6, wobei der elementare Synchronisationsblock (80) Folgendes aufweist:

einen Speicher, der ein gespeichertes Präambel-Wort (85) enthält; eine Vielzahl von Korrelatoren (81), wobei jeder Korrelator einen ersten Eingang zum Empfangen des übertragenen Präambel-Wortes besitzt, einen zweiten Eingang zum Empfangen des gespeicherten Präambel-Wortes mit dem Takt der Periode der Empfängeruhr plus oder minus einem Inkrement (ΔT), das für jeden Korrelator unterschiedlich ist, und einen Ausgang, der die Korrelationsrate zwischen den zwei Eingängen liefert; und eine Steuerung (83) zum Detektieren des Korrelators, der die höchste Korrelationsrate liefert.

8. Vorrichtung nach einem der Ansprüche 6 oder 7, die eine Vielzahl von elementaren Synchronisationsblöcken (80) aufweist, von welchen jeder geeignet ist, ein spezifisches Präambel-Wort zu detektieren.

## Claims

1. A method of radio transmission of a data word between a transmitter (1) and a receiver (65), comprising the steps of:

transmitting at least one data block comprising a preamble word (61) known by the receiver (65) and stored therein, followed by a data word (64) identically repeated a plurality of times, the identical words being directly transmitted the one after the others without intercalary transmission of any other data words; detecting the preamble word (61); synchronizing in frequency and in phase the receiver to the transmitter during the reception of the preamble word; synchronously averaging the repeated data word; and detecting the transmitted data based on the synchronous averaging; wherein the synchronous averaging step comprises the steps of:

    receiving a data word repeated a plurality of times;
    storing each of the bits of the first received data word into a storage register;
    adding the value of each box of the storage register to each bit of the next data words; and
    dividing the value of each box of the register by the number of repetitions of the data word.

2. The method of claim 1, wherein the transmitted data words are oversampled by the receiver (53).

3. The method of claim 1 or 2, wherein the detection and synchronization steps comprise the steps of:

    performing correlations between the transmitted preamble word (61) and second preamble words corresponding to the stored preamble word rated at the period of the receiver clock (53) plus or minus an increment (ΔT) different from one second preamble word to another; and
    detecting the correlation having the highest rate and adding or removing the increment corresponding to the receiver clock (53).

4. The method of any of claims 1 to 3, comprising the steps of:

    verifying whether the detected data are correct; and
    if not, starting the emission again with an increase in the number of repetitions of the transmitted data word.

5. The method of claims 3 and 4, comprising the steps of:

    providing a plurality of preamble words, each being associated with a different number of repetitions of the data word;
    performing, for each stored preamble word, correlations between the transmitted preamble word (61) and second preamble words corresponding to the stored preamble word rated at the period of the receiver clock (53) plus or minus an increment different from one second preamble word to another;
    performing the synchronous averaging according to the number of repetitions of the data word associated with the detected preamble word;
    if the data word associated with the preamble word is detected, sending a response (153) to the transmitter so that it sends data words with the same number of repetitions as the detected data word; and
    if not, sending to the receiver a data block (60) with a number of repetitions of the data word greater than the previous one.

6. A device of radio transmission of a data word between a transmitter (1) and a receiver (65), comprising:

    a transmitter (1) capable of transmitting at least one data block (60) comprising a preamble word (61) and a data word (64) identically repeated a plurality of times, the identical words being directly transmitted the one after the others without intercalary transmission of any other data words;
    an elementary synchronization block (80) enabling to synchronize the receiver (65) to the transmitter (1) in frequency and in phase during the reception of the preamble word and to detect the preamble word (61);
    a synchronous averager (67) averaging the repeated data word (64) and comprising:

        - means for receiving a data word repeated a plurality of times;
        - a register for storing each of the bits of the first received data word in a storage register;
        - an adder for adding the value of each box of the storage register to each bit of the next data words; and
        - a divider for dividing the value of each box of the register by the number of repetitions of the data word; and

    a detector for detecting the data resulting from the synchronous averaging.

7. The device of claim 6, wherein the elementary synchronization block (80) comprises:

    a memory containing a stored preamble word (85);
    a plurality of correlators (81), each correlator having a first input receiving the transmitted preamble word, a second input receiving the stored preamble word rated at the period of the receiver clock plus or minus an increment (ΔT) different for each correlator, and an output supplying the correlation rate between the two inputs; and
    a controller (83) detecting the correlator providing the highest correlation rate.

8. The device of claim 6 or 7, comprising a plurality of elementary synchronization blocks (80), each of which is capable of detecting a specific preamble word.

Fig 1A

Fig 1B

Fig 2

Fig 3A

Fig 3B

Fig 4

Fig 5

Fig 6A

Fig 6B

Fig 7

Fig 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2509248 A

- US 4518947 A